(19)

Europäisches Patentamt

European Patent Office

Office européen des brevets

(11) **EP 3 889 304 B1**

(12) **EUROPEAN PATENT SPECIFICATION**

(45) Date of publication and mention of the grant of the patent:
**27.09.2023 Bulletin 2023/39**

(21) Application number: **19889066.7**

(22) Date of filing: **26.11.2019**

(51) International Patent Classification (IPC):
*C22C 38/58* (2006.01)   *C22C 38/06* (2006.01)
*C22C 38/50* (2006.01)   *C22C 38/48* (2006.01)
*C22C 38/46* (2006.01)   *C22C 38/44* (2006.01)
*C22C 38/42* (2006.01)   *C22C 38/02* (2006.01)
*C21D 1/60* (2006.01)   *C22C 38/04* (2006.01)
*C21D 9/46* (2006.01)   *C21D 8/02* (2006.01)
*C22C 38/54* (2006.01)   *C22C 38/00* (2006.01)

(52) Cooperative Patent Classification (CPC):
**C22C 38/04; C21D 1/60; C21D 8/02; C21D 8/0226;
C21D 8/0236; C21D 8/0263; C21D 9/46;
C22C 38/02; C22C 38/06; C22C 38/42;
C22C 38/44; C22C 38/46; C22C 38/48;
C22C 38/50; C22C 38/58;**                    (Cont.)

(86) International application number:
**PCT/KR2019/016374**

(87) International publication number:
**WO 2020/111732 (04.06.2020 Gazette 2020/23)**

(54) **HIGH STRENGTH THICK STEEL PLATE FOR LINEPIPE HAVING EXCELLENT LOW TEMPERATURE TOUGHNESS AND DUCTILITY AS WELL AS LOW YIELD RATIO, AND METHOD THEREOF**

HOCHFESTE, DICKE STAHLPLATTE FÜR LEITUNGSROHR MIT AUSGEZEICHNETER TIEFTEMPERATURZÄHIGKEIT UND DUKTILITÄT SOWIE GERINGEM STRECKVERHÄLTNIS UND VERFAHREN DAFÜR

PLAQUE D'ACIER ÉPAISSE À HAUTE RÉSISTANCE POUR CANALISATION, POSSÉDANT UNE EXCELLENTE DUCTILITÉ ET TÉNACITÉ À BASSE TEMPÉRATURE AINSI QU'UN FAIBLE COEFFICIENT D'ÉLASTICITÉ, ET SON PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2018 KR 20180150706**

(43) Date of publication of application:
**06.10.2021 Bulletin 2021/40**

(73) Proprietor: **POSCO Co., Ltd
Pohang-si, Gyeongsangbuk-do 37859 (KR)**

(72) Inventor: **BAE, Jin-Ho
Gwangyang-si,
Jeollanam-do 57807 (KR)**

(74) Representative: **Meissner Bolte Partnerschaft
mbB
Patentanwälte Rechtsanwälte
Postfach 86 06 24
81633 München (DE)**

(56) References cited:
**EP-A1- 3 279 352          JP-A- S6 123 714
JP-A- H10 306 316          JP-A- H10 306 316
JP-A- 2001 207 220          JP-A- 2012 172 256
KR-A- 20050 086 375          KR-A- 20090 109 567
KR-A- 20170 075 936          KR-B1- 101 858 857**

• Serajzadeh S: "Modelling and Simulation in Materials Science and Engineering", , 1 October 2002 (2002-10-01), XP055831954, Retrieved from the Internet: URL:https://iopscience.iop.org/article/10. 1088/0965-0393/10/2/306/pdf [retrieved on 2021-08-13]

(52) Cooperative Patent Classification (CPC): (Cont.)
C21D 2211/001; C21D 2211/002; C21D 2211/005; C21D 2211/008; C22C 38/00; C22C 38/54

**Description**

[Technical Field]

The present invention relates to a high-strength thick steel plate for a pipeline having excellent low-temperature toughness and elongation as well as a low yield ratio, and a manufacturing method thereof, and more particularly, to a steel plate for a pipeline capable of being used for purposes such as construction, pipelines, as well as offshore structures, and a manufacturing method thereof.

[Background Art]

As a mining and transport environments become harsh, demand for an American petroleum institute (API) steel plate having high strength and excellent low-temperature toughness has gradually increased. In addition, transport pressure has been increased to increase transport efficiency at the time of using a steel pipe for transporting crude oil or gas, and recently, transport pressure has reached 120 atmospheres. Particularly, as oilfield development has been carried out in cold regions, such as Siberia and Alaska, where climatic conditions are poor, projects to transport abundant gas resources from oil regions to consumption regions through pipelines have been actively conducted. In this pipeline project, steel plates that have both of low-temperature fracture toughness and low yield ratio characteristics while mainly being thick steel plates have been used in consideration of a cryogenic temperature and durability against deformation of the ground as well as a high pressure of transport gas.

In particular, in a case of a thick steel plate having a thickness of 20 mm or more, it is very important to guarantee fracture arrestability of a central portion in the thickness direction. When the thickness of the steel plate increases, absolute rolling reduction at the time of rolling is insufficient and it is difficult to secure a sufficient cooling rate, such that ferrite grains become coarse, and low-temperature toughness becomes bad due to segregation of a central portion and impurities segregated in internal cracks at the time of continuous casting.

Many studies have been conducted in order to implement an excellent drop weight tearing test (DWTT) percent ductile fracture for an existing thick steel plate for a pipeline. In general, in order to secure low-temperature toughness, in the thick steel plate for a pipeline, an initial austenite grain size should be refined or low-temperature rolling should be performed up to a temperature directly above a ferrite transformation start temperature (Ar3) in order to secure fracture arrestability (DWTT characteristics) of a central portion at a guaranteed temperature of about -30°C. However, such a steel plate may not sufficiently solid-dissolve Nb (C,N) precipitated or crystallized in a slab, and a precipitation strengthening effect through reprecipitation of Nb(C,N) is insufficient. Therefore, a manufacturing method of compensating for strength and toughness by adding an expensive alloy such as Mo or Ni in a large amount has generally been used. A representative technology thereamong is disclosed in Patent Document 1. The above technology includes a manufacturing condition in which a slab extraction temperature is 1000 to 1150°C, and rolling ends at Ar3 or higher and cooling start is then performed at Ar3 or lower. In particular, a cooling start temperature is limited to Ar3 - 50°C to Ar3, and a cooling end temperature is limited to 300 to 550°C. Through such manufacturing conditions, a dual phase structure having 50 to 80% of ferrite with an average particle diameter of 5 $\mu$m or less and having bainite with an aspect ratio of 6 or less has been implemented to implement a DWTT 85% percent ductile fracture transition temperature of -20 to -30°C. However, with such a dual phase structure, there are many difficulties in manufacturing a steel plate whose yield strength in a direction of 30° with respect to a rolling direction is 540 MPa or more, tensile strength is 670 MPa or more, impact energy at -60°C is 190 J or more, lowest temperature satisfying DWTT percent ductile fracture of 85% or more is -18C° or lower, yield ratio is less than 0.85, and total elongation is 39% or more, which are minimum conditions required by a client company.

Patent Document 2 teaches a steel having sufficient performance as a steel for welding structures, low in a yield ratio, excellent in plastic deformation and moreover excellent in low temperature toughness. The slab has a composition containing., by weight: 0.01 to 0.20% C, 0.01 to 1.0% Si, 0.1 to 2.0% Mn, 0.001 to 0.1% Al and 0.001 to 0.01% N, in which the content of P as impurities is regulated to $\leq$ 0.025% and S to $\leq$ 0.015%, and the balance Fe with inevitable impurities is heated at the Ac3 point to 1250 °C and is subjected to rough rolling at a cumulative draft of 10 to 80% in the range of the heating temp. to 900°C. After that, accelerated cooling at 2 to 40 °C/sec is executed to the Ar3, point +50 °C to the Ar3 -50 °C in the cooling rate to supercool $\gamma$ phases. After the accelerated cooling, finish rolling at a cumulated draft of 30 to 90% is completed at 650°C. Furthermore, accelerated cooling is again executed to 20 to 450 °C at a cooling rate of 5 to 40 °C/sec.

Patent Document 3 relates to a method for producing a high strength hot rolled steel sheet for an electric seam welded tube excellent in low temperature toughness and weldability easily performable even in an ordinary hot rolling factory without providing the restriction of equipment. The slab has a composition containing, by mass: 0.01 to 0.10% C, $\leq$ 0.3% Si, 0.5 to 2.0% Mn, $\leq$ 0.03% P, $\leq$ 0.005% S, $\leq$ 0.005% N and 0.01 to 0.1% Nb in a range satisfying the following inequality of 5 $\leq$ Mn/Si $\leq$ 8, and the balance substantial Fe is heated at 1,100 to 1,250 deg.C and is subsequently subjected to rough rolling under the conditions that the draft in the first rolling performed at 1,100 °C or more is 15 to 30%, the total draft at 1,000 °C or more is 60% or more, and the draft in the final rolling is 15 to 30%. After that, the surface layer part of the steel sheet is cooled to the Ar3 point or less at a cooling rate of 5 °C/s or more. Next, at the point of time when the temperature of the surface layer part reaches (Ac3-40 °C) to (Ac3+40 °C) by recuperation or forced heating. Finish rolling is started and is finished under the conditions that the total draft at 950°C or less is 60% or more, and the rolling finishing temperature is the Ar3 point or more. Within 2 sec after the finish of the finish rolling, cooling is started, and the steel sheet is cooled to 600°C or less at a rate of 10 °C/s or more and is coiled in the temperature range of 600 to 350°C.

Non-patent Document 1 describes that in the process of continuous hot slab rolling, it is vital to know the temperature distribution within the slab along the length of the rolling mill because temperature is the dominant parameter controlling the kinetics of metallurgical transformations and the flow stress of the rolled metal. The microstructural changes, the mechanical properties as well as the final dimensions of the product and roll-force depend on the temperature distribution within the metal being rolled. Non-patent Document 1 relates to a mathematical model based on the finite element method which is utilized to predict the temperature distribution and microstructural changes during the continuous hot slab rolling process. The effects of various parameters such as the heat of deformation, the work-roll temperature, the rolling speed, and the heat transfer coefficient between the work-roll and the metal are all taken into account in the analyses. To verify the validity of the model and the generated computer code, a comparison is carried out between the theoretical and plant-recorded results.

[Related Art Document]

(Patent Document 1) JP 2010 - 077 492 A
(Patent Document 2) JP H10 - 306 316 A
(Patent Document 3) JP 2001 - 207 220 A
(Non-patent Document 1) Serajzadeh S: "Modelling and Simulation in Materials Science and Engineering", 1 October 2002 (2002-10-01), XP055831954.

[Invention]

[Technical Problem]

An aspect of the present invention is to provide a high-strength thick steel plate for a pipeline having excellent low-temperature toughness and elongation and a low yield ratio, and a manufacturing method thereof.

[Technical Solution]

The solution is proposed in the appended claims.

[Advantageous Effects]

As set forth above, according to the present invention, a high-strength thick steel plate for a pipeline having excellent low-temperature toughness and elongation and a low yield ratio, and a manufacturing method thereof are provided.

[Best Mode for Invention]

Hereinafter, a high-strength thick steel plate for a pipeline having excellent low-temperature toughness and elongation and a low yield ratio according to the present invention will be described. First, an alloy composition according to the present invention will be described. However, an alloy composition to be described below is represented by wt% unless otherwise stated.

C: 0.03 to 0.055%

C is an element that is the most economical and effective in strengthening a steel, but is an element that decreases weldability, formability and toughness by promoting segregation at a central portion of a thickness at the time of casting a slab when it is added in a large amount. When a content of C is less than 0.03%, a relatively large amount of other alloying elements need to be added in order to obtain desired strength of the present invention, which is not economical, and when a content of C exceeds 0.055%, weldability, formability, and toughness may be decreased. Therefore, the content of C is in the range of 0.03 to 0.055%. A lower limit of the content of C is preferably 0.031%, more preferably 0.032%, and most preferably 0.034%. An upper limit of the content of C is preferably 0.053%, more preferably 0.051%, and most preferably 0.049%.

Si: 0.1 to 0.35%

Si is an element that is not only required in order to deoxidize molten steel, but also exhibits a solid solution strengthening effect. When a content of Si is less than 0.1, deoxidation of a molten steel is insufficient, such that it is difficult to obtain a clean steel, and when a content of Si exceeds 0.35%, a red scale is formed by Si at the time of hot rolling, resulting in a very bad shape of a surface of the steel plate and decreasing ductility. Therefore, the content of Si is in the range of 0.1 to 0.35%. A lower limit of the content of Si is preferably 0.13%, more preferably 0.16%, and most preferably 0.18%. An upper limit of the content of Si is preferably 0.34%, more preferably 0.33%, and most preferably 0.32%.

Mn: 1.7 to 2.2%

Mn is an element that is effective in solid solution strengthening of the steel, and needs to be added in an amount of 1.7% or more in order to increase hardenability and exhibit high strength. However, if a content of Mn exceeds 2.2%, a segregation portion is greatly developed at a central portion of a thickness at the time of casting the slab in a steelmaking process and weldability of a final product is impaired, which is not preferable. Therefore, the content of Mn is in the range of 1.7 to 2.2%. A lower limit of the content of Mn is preferably 1.73%, more preferably 1.76%, and most preferably 1.78%. An upper limit of the content of Mn is preferably 2.15%, more preferably 2.1%, and most preferably 2.05%.

Al: 0.01 to 0.04%

Al is added as a deoxidizing agent along with Si at the time of steelmaking and has a solid solution strengthening effect, but when a content of Al exceeds 0.04%, low-temperature impact toughness is impaired, and when a content of Al is less than 0.01%, a deoxidation effect is insufficient, resulting in a decrease in toughness. Therefore, the content of Al is in the range of 0.01 to 0.04%. A lower limit of the content of Al is preferably 0.015%, more preferably 0.02%, and most preferably 0.025%. An upper limit of the content of Al is preferably 0.038%, more preferably 0.036%, and most preferably 0.035%.

Ti: 0.005 to 0.025%

Ti is an element that is very useful for refining grains and is present as TiN in the steel to have an effect of suppressing growth of grains in a heating process for hot rolling, remaining Ti after reacting with nitrogen is solid-dissolved in the steel and combines with carbon to form a precipitate of TiC, and the formation of TiC is very fine to significantly improve strength of the steel. At least 0.005% or more of Ti needs to be added in order to obtain an austenite grain growth suppression effect by the precipitation of TiN and a strength increase by the formation of TiC, but when a content of Ti exceeds 0. 025%, a steel plate is rapidly heated to a melting point at the time of manufacturing a steel pipe by welding the steel plate, such that TiN is solid-dissolved again, resulting in a decrease in toughness of a welding heat-affected zone. Therefore, the content of Ti is in the range of 0.005 to 0.025%. A lower limit of the content of Ti is preferably 0.008%, more preferably 0.012%, and most preferably 0.015%. An upper limit of the content of Ti is preferably 0.024%, more preferably 0.023%, and most preferably 0.021%.

N: 0.008% or less

The reason for limiting N is due to the addition of Ti. In general, N is solid-dissolved in the steel and then precipitated to serve to increase strength of the steel, and such an ability is much greater than that of carbon. However, it is known that the more nitrogen present in the steel, the more the decrease in toughness, and thus, it is a general trend to decrease a content of nitrogen as much as possible. However, in the present invention, an appropriate amount of nitrogen is present and reacted with Ti to form TiN, thereby suppressing growth of grains in a reheating process. However, since some of Ti does not react with N and needs to react with carbon in a subsequent process, the content of N is within a range of 0.008% or less. An upper limit of the content of N is preferably 0.007%, more preferably 0.006%, and most preferably 0.005%. Meanwhile, a lower limit of the content of N is preferably 0.001%, more preferably 0.002%, and most preferably 0.003%.

Nb: 0.08 to 0.12%

Nb is an element that is very useful for refining grains, and is an element that significantly improves strength of the steel. In order to obtain the above effect, Nb is preferably added in an amount of at least 0.08% or more, but when a content of Nb exceeds 0.12%, excessive Nb carbonitride is precipitated, which is harmful to toughness of the steel plate. Thus, the content of Nb is in the range of 0.08 to 0.12%. A lower limit of the content of Nb is preferably 0.0803%, more preferably 0.0806%, and most preferably 0.081%. An upper limit of the content of Nb is preferably 0.117%, more preferably 0.114%, and most preferably 0.112%.

Cr: 0.2 to 0.45%

Cr generally increases hardenability of the steel at the time of being directly quenched. In addition, Cr generally improves corrosion resistance and hydrogen induced cracking resistance. In addition, since cementite and carbide are integrated, Cr may show deteriorated impact characteristics, may obtain good impact toughness by suppressing formation of a pearlite structure that affects a decrease in yield strength after a pipe is formed, and may suppress the decrease in yield strength after the pipe is formed. To this end, Cr is preferably added in an amount of 0.2% or more, but when a content of Cr exceeds 0.45%, cooling cracking after field welding tends to be caused, and toughness of the steel plate and heat affected zone (HAZ) toughness tends to be deteriorated. Therefore, the content of Cr is in the range of 0.2 to 0.45%. A lower limit of the content of Cr is preferably 0.21%, more preferably 0.215%, and most preferably 0.22%. An upper limit of the content of Cr is preferably 0.43%, more preferably 0.41%, and most preferably 0.39%.

Ni: 0.2 to 0.35%

Ni is an austenite stabilizing element, and is an element that suppresses formation of pearlite and facilitates formation of acicular ferrite, which is a low-temperature transformation structure, and is preferably added in an amount of 0.2% or more. However, when a content of Ni exceeds 0.35%, it is disadvantageous in terms of cost because Ni is an expensive element, and toughness of a weld zone is impaired. Therefore, the content of Ni is in the range of 0.2 to 0.35%. A lower limit of the content of Ni is preferably 0.23%, more preferably 0.25%, and most preferably 0.27%. An upper limit of the content of Ni is preferably 0.34%, more preferably 0.33%, and most preferably 0.31%.

Cu: 0.05 to 0.3%

Cu is an element that is solid-dissolved in the steel to be required for increasing strength. In order to sufficiently obtain such an effect, Cu is preferably added in
an amount of 0.05% or more, but when a content of Cu exceeds 0.3%, cracking easily occurs in a slab. Therefore, the content of Cu is in the range of 0.05 to 0.3%. A lower limit of the content of Cu is preferably 0.08%, more preferably 0.12%, and most preferably 0.15%. An upper limit of the content of Cu is preferably 0.28%, more preferably 0.25%, and most preferably 0.23%.

Mo: 0.2 to 0.4%

Mo is very effective in increasing strength of a material, and serves to decrease a yield ratio by promoting formation of acicular ferrite, which is a low-temperature transformation structure. In addition, since cementite and carbide are integrated, Mo may show deteriorated impact characteristics, may obtain good impact toughness by suppressing formation of a pearlite structure that affects a decrease in yield strength after a pipe is formed, and may suppress the decrease in yield strength after the pipe is formed. In order to obtain such an effect, Mo is preferably added in an amount of 0.2% or more. However, when a content of Mo exceeds 0.4%, it is disadvantageous in terms of cost because it is an expensive element, welding low-temperature cracking is suppressed, and a low-temperature transformation phase is generated in a base material, such that toughness is decreased. Therefore, the content of Mo is in the range of 0.2 to 0.4%. A lower limit of the content of Mo is preferably 0.23%, more preferably 0.25%, and most preferably 0.27%. An upper limit of the content of Mo is preferably 0.395%, more preferably 0.39%, and most preferably 0.385%.

P: 0.02% or less

P is an element that is inevitably contained at the time of steelmaking, and in the present invention, the content of P needs to be controlled to a level as low as possible. When P is added, P is segregated at a central portion of the steel plate and may be used as a cracking initiation point or a propagation path. In theory, it is advantageous to limit the content of P to 0%, but P cannot but be inevitably added as an impurity in a manufacturing process. Therefore, it is important to manage an upper limit of the content of P, and in the present invention, the content of P is controlled to be 0.02wt% or less. The content of P is preferably 0.017% or less, more preferably 0.013% or less, and most preferably 0.01% or less.

S: 0.002% or less

S is also an impurity element that is present in the steel and combines with Mn or the like to form non-metallic inclusions, and thus significantly impairs the toughness and strength of the steel. Therefore, it is preferable to decrease a content of S as much as possible, and in the present invention, the content of S is controlled to be 0.002 or less. The content of S is preferably 0.0019% or less, more preferably 0.0017% or less, and most preferably 0.0015% or less.

Ca: 0.0005 to 0.004%

Ca is an element useful for spheroidizing MnS non-metallic inclusions, and may suppress crack generation around the MnS non-metallic inclusions. When a content of Ca is less than 0.0005%, an effect of spheroidizing the MnS non-metallic inclusions does not appear. On the other hand, when the content of Ca exceeds 0.004%, a large amount of CaO-based inclusions is generated to decrease impact toughness. Therefore, the content of Ca is in the range of 0.0005 to 0.004%. A lower limit of the content of Ca is preferably 0.001%, more preferably 0.0015%, and most preferably 0.0018%. An upper limit of the content of Ca is preferably 0.0037%, more preferably 0.0033%, and most preferably 0.003%.

V: 0.01 to 0.04%

V is similar to Nb, but has a less obvious effect than Nb. However, when V is added together with Nb, a remarkably excellent effect is exhibited, and the strength of the steel is further increased. In order to obtain such an effect, V needs to be added in an amount of at least 0.01% or more, but when a content of V exceeds 0.04%, excessive V carbonitride is precipitated, which is harmful to toughness of the steel plate, and decreases, particularly, toughness of the welding heat-affected zone and decreases field weldability accordingly. Therefore, the content of V is in the range of 0.01 to 0.04%. A lower limit of the content of V is preferably 0.015%, more preferably 0.02%, and most preferably 0.022%. An upper limit of the content of V is preferably 0.039%, more preferably 0038%, and most preferably 0.037%.

V is similar to Nb, but has a less obvious effect than Nb. However, when V is added together with Nb, a remarkably excellent effect is exhibited, and the strength of the steel is further increased. In order to obtain such an effect, V needs to be added in an amount of at least 0.01% or more, but when a content of V exceeds 0.04%, excessive V carbonitride is precipitated, which is harmful to toughness of the steel plate, and decreases, particularly, toughness of the welding heat-affected zone and decreases field weldability accordingly. Therefore, the content of V is preferably in the range of 0.01 to 0.04%. A lower limit of the content of V is more preferably 0.015%, even more preferably 0.02%, and most preferably 0.022%. An upper limit of the content of V is more preferably 0.039%, even more preferably 0.038%, and most preferably 0.037%.

B: 0.0005% or less

B significantly improves hardenability in a low carbon steel to facilitate formation of a low-temperature transformation phase. In particular, B serves to increase a hardenability improving effect of Mo and Nb, and increases strength of grain boundaries to suppress cracking in grains. However, addition of an excessive amount of B causes embrittlement due to precipitation of $Fe_{23}(C,B)_6$. Therefore, a content of B needs to be determined in consideration of contents of other hardenability elements, and is in the range of 0.0005% or less. An upper limit of the content of B is preferably 0.00045%, more preferably 0.0004%, and most preferably 0.00035%. Meanwhile, a lower limit of the content of B is preferably 0.00003%, more preferably 0.00006%, and most preferably 0.00009%.

The remaining component of the present invention is iron (Fe). However, in a general manufacturing process, unintended impurities may inevitably be mixed from a raw material or the surrounding environment, and thus, these impurities may not be excluded. Since these impurities may be known by those skilled in a manufacturing process, all contents of these impurities are not specifically mentioned in the present specification.

Meanwhile, in the present invention, not only the alloy composition described above but also Relational expressions 1 to 4 are satisfied. Contents of alloying elements described in Relational expressions 1 to 4 are wt%.

[Relationship expression 1] 19 ≤ (Mo/96)/(P/31) ≤ 30

Relational expression 1 is to prevent grain boundary segregation of P. When a value of Relational expression 1 is less than 19, a grain boundary segregation effect of P due to formation of a Fe-Mo-P compound is not sufficient, and when the value of Relational expression 1 exceeds 30, impact energy decreases due to formation of a low-temperature transformation phase caused by an increase in hardenability.

[Relational expression 2] 1.42 ≤ Cr + 2Mo + Cu + Ni + 1000B ≤ 1.75

Relational expression 2 is for obtaining fine acicular ferrite. When a value of Relational expression 2 is less than 1.42, it becomes difficult to secure strength, and when the value of Relational expression 2 exceeds 1.75, a possibility that separation harmful to impact toughness will occur increases.

[Relational expression 3] 4 < {3C/12 + Mn/55} × 100 ≤ 4.9

Relational expression 3 is for suppressing formation of an martensite-austenite constituent (MA) phase, which is a hard second phase structure. An increase in C and Mn lowers a solidification temperature of the slab to promote segregation of the center of the slab, and narrows a formation section of delta ferrite to make it difficult to homogenize the slab during continuous casting. In addition, Mn is a representative element segregated at a central portion of the slab, and promotes a formation of a second phase that impairs ductility of a pipe, and an increase in C widens a coexistence section of a solid phase and a liquid phase at the time of the continuous casting to intensify the segregation. Therefore, when a value of Relational expression 3 exceeds 4.9, the strength increases, but heterogeneity of the slab increases for the above reason, such that a hard second phase is formed in the slab to decrease low-temperature toughness of the steel plate and the pipe. On the other hand, when the value of Relational expression 3 is 4 or less, it is advantageous in securing impact toughness of the steel plate, but it is difficult to secure the strength.

[Relational expression 4] 600 ≤ 400C + 6800Nb + 600V + 800Ti + 300Al ≤ 820

Relational expression 4 is to secure the strength through fine solid solution strengthening and precipitation strengthening. When a value of Relational expression 4 is less than 600, it becomes difficult to secure the strength, and when the value of Relational expression 4 exceeds 820, strength of a structure is excessively increased, such that elongation and impact toughness are decreased.

A microstructure of the steel plate for a pipeline according to the present invention contains, by area%, 1 to 5% of polygonal ferrite, 60 to 75% of acicular ferrite, 20 to 30% of bainitic ferrite, and 5% or less of martensite-austenite constituent. The polygonal ferrite serves to increase toughness and elongation. When a fraction of the polygonal ferrite is less than 1 area%, there is a disadvantage that toughness and elongation decrease, and when the fraction of the polygonal ferrite exceeds 5 area%, there is a disadvantage that strength decreases. The acicular ferrite serves to secure strength. When a fraction of the acicular ferrite is less than 60 area%, there is a disadvantage that the strength decreases, and when the fraction of the acicular ferrite exceeds 75 area%, there is a disadvantage that low-temperature toughness decreases. The bainitic ferrite serves to secure strength. When a fraction of the bainitic ferrite is less than 20 area%, there is a disadvantage that the strength decreases, and when the fraction of the bainitic ferrite exceeds 30 area%, there is a disadvantage that low-temperature toughness decreases. Meanwhile, in the present invention, the martensite-austenite constituent is an impure structure that affects low-temperature toughness. However, in consideration of the fact that the martensite-austenite constituent is inevitably formed in a manufacturing process, in the present invention, an upper limit of a fraction of the martensite-austenite constituent is controlled to be 5 area%.

The polygonal ferrite has an average effective grain size of 13 μm or less. An effect of increasing the low-temperature toughness may be obtained by performing control as described above.

It is preferable that the acicular ferrite has an average effective grain size of 11 μm or less. An effect of securing the strength and suppressing the decrease in the low-temperature toughness may be obtained by performing control as described above.

The bainitic ferrite has an average effective grain size of 14 $\mu$m or less. An effect of securing the strength and suppressing the decrease in the low-temperature toughness may be obtained by performing control as described above.

The martensite-austenite constituent has an average effective grain size of 0.8 um or less. An effect of minimizing a decrease in the low-temperature toughness may be obtained by performing control as described above.

Meanwhile, the average effective crystal grain size described above is a value obtained by assuming that grains have a spherical shape and then averaging sizes of the grains using an electron backscatter diffraction (EBSD).

In the steel plate for a pipeline according to the present invention provided as described above the yield strength in a direction of 30° with respect to a rolling direction is 550 MPa or more, a tensile strength is 660 MPa or more, a yield ratio is 0.83 or less, a separation length at -10°C is less than 5 mm, an impact energy at -10°C is 320 J or more, a total elongation is 42% or more, and a minimum temperature at which a drop weight tearing test (DWTT) percent ductile fracture of 85% or more is satisfied is -30°C or lower, such that excellent strength, low-temperature toughness, and elongation as well as a low yield ratio of the steel plate is secured. Meanwhile, it has been known in the related art that a yield strength in the direction of 30° with respect to the rolling direction of the steel plate has the lowest value of yield strengths of the steel plate, and in the present invention, the high yield strength as described above is secured. In addition, the steel plate according to the present invention may be a thick steel plate having a thickness of 20 mm or more.

A manufacturing method of a high-strength thick steel plate for a pipeline having excellent low-temperature toughness and elongation and a low yield ratio according to the present invention will hereinafter be described.

First, a steel slab that satisfies the abovementioned alloy composition and Relational expressions 1 to 4 is heated at 1160 to 1300°C. When a heating temperature of the steel slab is less than 1160°C, which is a temperature at which added alloying elements precipitated in a continuous casting process are sufficiently solid-dissolved again, precipitates such as (Ti,Nb) C and NbC are decreased in a process after hot rolling. Therefore, the heating temperature of the steel slab may be maintained at 1160°C or higher to promote that the precipitates are solid-dissolved again and maintain an austenite crystal grain size at an appropriate size, thereby obtaining a uniform microstructure in a length direction of a coil while improving the strength of the steel plate. On the other hand, when the heating temperature of the steel slab exceeds 1300°C, there is a disadvantage that strength is decreased and toughness becomes inferior due to abnormal grain growth of austenite grains. Therefore, the heating temperature of the steel slab is 1160 to 1300°C. A lower limit of the heating temperature is preferably 1165°C, more preferably 1170°C, and most preferably 1180°C. An upper limit of the heating temperature is preferably 1280°C, more preferably 1260°C, and most preferably 1240°C.

A heating time at the time of heating the steel slab is preferably 55 minutes or more. When the heating time is less than 55 minutes, it may be difficult to sufficiently solid-dissolve the alloying elements precipitated in a continuous casting process, and a slab thickness and a degree of cracking in a length direction may be low to cause a poor rolling property and a physical property deviation of a final steel plate. Therefore, at the time of heating the steel slab, the heating time is preferably 55 minutes or more, and the heating is preferably performed for a time as long as possible, but is preferably performed for 90 minutes or less in consideration of productivity.

Then, the heated steel slab is extracted at 1070 to 1140°C. When the extraction temperature is less than 1070°C, there is a disadvantage that a rolling load is increased, which lays a burden on a facility, and when the extraction temperature exceeds 1140°C, there is a disadvantage that a recrystallized austenite size becomes coarse. Therefore, the extraction temperature is in the range of 1070 to 1140°C. A lower limit of the extraction temperature is preferably 1080°C, more preferably 1090°C, and most preferably 1100°C. An upper limit of the extraction temperature is preferably 1138°C, more preferably 1136°C, and most preferably 1134°C.

Then, primary rolling for obtaining a steel plate by ending rolling of the extracted steel slab at 930 to 960°C is performed. When an end temperature of the primary rolling is less than 930°C, there is a disadvantage that a rolling load increases, and when the end temperature of the primary rolling exceeds 960°C, there is a disadvantage that austenite grains become coarse. Therefore, the end temperature of the primary rolling is in the range of 930 to 960°C. A lower limit of the end temperature of the primary rolling is preferably 934°C, more preferably 937°C, and most preferably 940°C. An upper limit of the end temperature of the primary rolling is preferably 957°C, more preferably 953°C, and most preferably 950°C.

At the time of the primary rolling, it is preferable to roll the steel slab three or more times at a reduction ratio of 12% or more per pass. When the steel slab is not rolled three or more times at a reduction ratio of 12% or more per pass, 100% of recrystallization may not occur, and it may be difficult to refine a recrystallized structure.

Then, the steel plate is primarily water-cooled to 890 to 925°C. When a stop temperature of the primary water-cooling is less than 890°C, there is a disadvantage that a rolling load increases, and when the stop temperature of the primary water-cooling exceeds 925°C, there is a disadvantage that austenite grains become coarse. Therefore, the stop temperature of the primary water-cooling is in the range of 890 to 925°C. A lower limit of the stop temperature of the primary water-cooling is preferably 895°C, more preferably 900°C, and most preferably 910°C. An upper limit of the stop temperature of the primary water-cooling is preferably 923°C, more preferably 921°C, and most preferably 920°C.

A cooling rate at the time of the primary water-cooling is preferably in the range of 20 to 40°C/s. When the cooling rate of the primary water-cooling is less than 20°C/s, a degree of cracking in a thickness direction of the slab may be low to cause a physical property deviation of a final steel plate. In particular, a temperature decrease at a central portion of the slab is insufficient, such that a recrystallized region low-temperature rolling effect may not be expected. Therefore, coarse bainite is formed at a central portion of a thickness of the final steel plate, and DWTT characteristics may be deteriorated. On the other hand, it is difficult for the cooling rate to exceed 40°C/s due to characteristics of a facility. Therefore, the cooling rate at the time of the primary water-cooling is preferably in the range of 20 to 40°C/s. A lower limit of the cooling rate at the time of the primary water-cooling is more preferably 22°C/s, even more preferably 23°C/s, and most preferably 25°C/s. An upper limit of the cooling rate at the time of the primary water-cooling is more preferably 38°C/s, even more preferably 36°C/s, and most preferably 35°C/s.

Then, secondary rolling for rolling the primarily water-cooled steel plate and ending the rolling at 840 to 860°C is performed. When an end temperature of the secondary rolling exceeds 860°C, a deformation zone formed during the rolling disappears, such that an effect of the rolling disappears, and when the end temperature of the secondary rolling is less than 840°C, a rolling load at the time of third rolling is increased, such that the rolling becomes difficult. A lower limit of the end temperature of the secondary rolling is more preferably 842°C, even more preferably 844°C, and most preferably 846°C. An upper limit of the end temperature of the secondary rolling is more preferably 858°C, even more preferably 856°C, and most preferably 854°C.

At the time of the secondary rolling, it is preferable to roll the steel plate three or more times at a reduction ratio of 20% or more per pass. In a case of a thick steel plate, it is important to uniformly refine a structure of a central portion of the slab, and it is preferable to roll the steel plate three or more times at a reduction ratio of 20% or more per pass in order to sufficiently apply a rolling reduction to the central portion.

Then, tertiary rolling for rolling the secondarily rolled steel plate and ending the rolling at 770 to 820°C is performed. When an end temperature of the tertiary rolling exceeds 820°C, a final microstructure is coarse, such that desired strength and impact toughness may not be obtained, and when the end temperature of the tertiary rolling is less than 770°C, a yield ratio may be deteriorated, and a facility load problem of a finishing rolling mill may occur. A lower limit of the end temperature of the tertiary rolling is more preferably 775°C, even more preferably 778°C, and most preferably 790°C. An upper limit of the end temperature of the tertiary rolling is more preferably 817°C, even more preferably 813°C, and most preferably 810°C.

Meanwhile, in the present invention, the secondary rolling and the tertiary rolling correspond to unrecrystallized region rolling. A cumulative reduction ratio at the time of the secondary rolling and the tertiary rolling corresponding to the unrecrystallized region rolling exceeds 80%. When the cumulative reduction ratio is 80% or less, austenite is not sufficiently crushed, such that it may be difficult to obtain a fine transformation structure. Therefore, the cumulative reduction ratio at the time of the secondary rolling and the tertiary rolling exceeds 80%. The cumulative reduction ratio at the time of the secondary rolling and the tertiary rolling is preferably more than 80%, more preferably 84% or more, and most preferably 85% or more.

Then, the tertiarily rolled steel plate start to be cooled at 740 to 760°C and is secondarily water-cooled at a cooling rate of 10 to 40°C/s. When a start temperature of the secondary water-cooling is less than 740°C or exceeds 760°C, it may be difficult to secure fractions of acicular ferrite and bainitic ferrite to be obtained in the present invention. In addition, even though the alloy composition and other manufacturing conditions are controlled to obtain fine precipitates, when the cooling rate is less than 10°C/s at the time of the secondary water-cooling, an average size of the precipitates may become coarse. The reason is that as the cooling rate becomes faster, more nuclei are generated, such that the precipitates becomes finer. As the cooling rate becomes fasters, sizes of the precipitates become fine, and thus, an upper limit of the cooling rate does not need to be limited, but even though the cooling rate becomes faster than 40°C/s, an effect of refining the precipitates is no longer increased. Thus, the cooling rate at the time of the second water-cooling is in the range of 10 to 40°C/s. A lower limit of the start temperature of the secondary water-cooling is preferably 742°C, more preferably 744°C, and most preferably 746°C. An upper limit of the start temperature of the secondary water-cooling is preferably 758°C, more preferably 756°C, and most preferably 754°C. A lower limit of the cooling rate at the time of the second water-cooling is preferably 12°C/s, more preferably 14°C/s, and most preferably 16°C/s. An upper limit of the cooling rate at the time of the second water-cooling is preferably 38°C/s, more preferably 36°C/s, and most preferably 35°C/s.

Then, the secondarily water-cooled steel plate is wound at 400 to 520°C. When the coiling temperature exceeds 520°C, the fractions of the acicular ferrite and the bainitic ferrite decrease, the fraction of the martensite-austenite constituent increases, and the precipitates excessively coarsely grow, such that it is difficult to secure strength and low-temperature toughness. On the other hand, when the coiling temperature is less than 400°C, martensite or the like is formed, such that impact characteristics become poor. Therefore, the coiling temperature is in the range of 400 to 520°C. A lower limit of the coiling temperature is preferably 415°C, more preferably 430°C, and most preferably 440°C. An upper limit of the coiling temperature is preferably 510°C, more preferably 500°C, and most preferably 490°C.

Then, the wound steel plate is tertiarily water-cooled for 100 seconds or more. By performing the tertiary water-cooling for 100 seconds or more, heat recuperation of a coil after coiling may be prevented to prevent toughness of an inner coiling portion of the coil from decreasing due to additional precipitation. A time of the tertiary water-cooling is preferably 105 seconds or more, more preferably 110 seconds or more, and most preferably 115 seconds or more. An upper limit of the time of the tertiary water-cooling is not particularly limited.

A cooling rate at the time of the tertiary water-cooling is preferably in the range of 10 to 40°C/s. When the cooling rate at the time of the tertiary water-cooling is less than 10°C/s, there is a disadvantage that latent heat inside the coil may not be effectively cooled, and when the cooling rate at the time of the tertiary water-cooling exceeds 40°C/s, there is a disadvantage that the fraction of the martensite-austenite constituent in an outer coiling portion of the coil increases. Therefore, the cooling rate at the time of the tertiary water-cooling is preferably in the range of 10 to 40°C/s. A lower limit of the cooling rate at the time of the tertiary water-cooling is more preferably 12°C/s, even more preferably 14°C/s, and most preferably 16°C/s. An upper limit of the cooling rate at the time of the tertiary water-cooling is more preferably 38°C/s, even more preferably 36°C/s, and most preferably 34°C/s.

[Mode for Invention]

The present invention will hereinafter be described in more detail through Inventive Examples. However, it is to be noted that Inventive Example to be described later is for illustrating and describing the present invention in detail and is not intended to limit the scope of the present invention. The reason is that the scope of the present invention is determined by contents described in the claims and contents reasonably inferred from these contents.

(Inventive Example)

After molten steels having alloy compositions shown in Tables 1 and 2 was prepared as steel slabs by a continuous casting method, the steel slabs were heated at 1160 to 1300°C, were extracted under conditions shown in Tables 3 and 4, and are then rolled, wound, and cooled to prepare hot-rolled steel plates having a thickness of 21.6 mm. In this case, an end temperature of primary rolling, that is, recrystallized region rolling was 930 to 960°C. Types and fractions of microstructures, effective grain sizes, and mechanical properties of the hot-rolled steel plates manufactured as described above were measured, and were then shown in Tables 5 and 6 below. In this case, yield strength in a direction of 30° with respect to a rolling direction was measured as the yield strength.

Meanwhile, a separation length and a DWTT percent ductile fracture were measured using an image analyzer after an image of a fracture surface of the hot-rolled steel plate is captured.

[Table 1]

| Steel Type No. | Alloy Composition (wt%) | | | | | | | | | |
|---|---|---|---|---|---|---|---|---|---|---|
| | C | Mn | Si | Nb | Ti | V | Cr | Mo | Ni | Cu |
| Inventive Steel 1 | 0.04 | 1.89 | 0.29 | 0.089 | 0.019 | 0.025 | 0.25 | 0.28 | 0.30 | 0.20 |
| Inventive Steel 2 | 0.043 | 1.79 | 0.31 | 0.095 | 0.018 | 0.024 | 0.23 | 0.34 | 0.28 | 0.18 |
| Inventive Steel 3 | 0.035 | 2.0 | 0.20 | 0.082 | 0.017 | 0.034 | 0.25 | 0.38 | 0.28 | 0.18 |
| Inventive Steel 4 | 0.05 | 1.88 | 0.28 | 0.11 | 0.019 | 0.028 | 0.38 | 0.32 | 0.33 | 0.21 |
| Inventive Steel 5 | 0.048 | 2.0 | 0.19 | 0.10 | 0.02 | 0.036 | 0.32 | 0.31 | 0.28 | 0.22 |
| Comparative Steel 1 | 0.05 | 1.7 | 0.32 | 0.08 | 0.015 | 0.028 | 0.12 | 0.26 | 0.41 | 0.22 |
| Comparative Steel 2 | 0.063 | 2.1 | 0.28 | 0.11 | 0.022 | 0.038 | 0.21 | 0.33 | 0.43 | 0.16 |
| Comparative Steel 3 | 0.085 | 2.2 | 0.32 | 0.11 | 0.012 | 0.022 | 0.23 | 0.30 | 0.43 | 0.22 |
| Comparative Steel 4 | 0.063 | 2.1 | 0.28 | 0.12 | 0.021 | 0.023 | 0.20 | 0.32 | 0.45 | 0.13 |
| Comparative Steel 5 | 0.044 | 1. 9 | 0.29 | 0.12 | 0.022 | 0.021 | 0.20 | 0.48 | 0.71 | 0.22 |

[Table 2]

| Steel Type No. | Alloy Composition (wt%) | | | | | | | | | |
|---|---|---|---|---|---|---|---|---|---|---|
| | A l | P | S | N | Ca | B | Relatio nal Express ion 1 | Relatio nal Express ion 2 | Relatio nal Express ion 3 | Relatio nal Express ion 4 |
| Inventi ve Steel 1 | 0.030 | 0.0043 | 0.0009 | 0.0044 | 0.0020 | 0.0002 | 21 | 1.51 | 4.44 | 660.4 |
| Inventi ve Steel 2 | 0.031 | 0.0056 | 0.0012 | 0.0038 | 0.0025 | 0.0003 | 19. 6 | 1.67 | 4.33 | 701.3 |
| Inventi ve Steel 3 | 0.031 | 0.0052 | 0.0011 | 0.0041 | 0.0022 | 0.0002 | 23.6 | 1.67 | 4.51 | 614 . 9 |
| Inventi ve Steel 4 | 0.034 | 0.0049 | 0.0014 | 0.0043 | 0.0023 | 0.0001 | 21.1 | 1.66 | 4.67 | 810.2 |
| Inventi ve Steel 5 | 0.031 | 0.0048 | 0.0008 | 0.0032 | 0.0023 | 0.0003 | 20.9 | 1.74 | 4.84 | 746.1 |
| Compara tive Steel 1 | 0.010 | 0.016 | 0.0019 | 0.0031 | 0.0032 | 0.0002 | 5.2 | 1.47 | 4.34 | 595.8 |
| Compara tive Steel 2 | 0.040 | 0.017 | 0.0012 | 0.0030 | 0.0028 | 0.0001 | 6.3 | 1.56 | 5.39 | 825.6 |
| Compara tive Steel 3 | 0.050 | 0.021 | 0.0014 | 0.0038 | 0.0031 | 0.0001 | 4.6 | 1.58 | 6.13 | 819.8 |
| Compara tive Steel 4 | 0.048 | 0.013 | 0.0015 | 0.0040 | 0.0025 | 0.0001 | 7.9 | 1.52 | 5.39 | 886.2 |
| Compara tive Steel 5 | 0.042 | 0.003 | 0.0016 | 0.0030 | 0.0029 | 0.0002 | 51.7 | 2.29 | 4.55 | 876.4 |

[Relational Expression 1] (Mo/96) / (P/31)

[Relational Expression 2] Cr + 2Mo + Cu + Ni + 1000B

[Relational Expression 3] {3C/12 + Mn/55} × 100

[Relational Expression 4] 400C + 6800Nb + 600V + 800Ti + 300Al

[Table 3]

| Division | Steel Type No. | Heating Time (Minute) | Extraction Temperature (°C) | Number of Times of Rolling in which Reduction Ratio per Pass at Time of Primary Rolling is 12% or More | End Temperature (°C) of Primary Rolling | Cooling Rate (°C/s) of Primary Cooling | Stop Temperature (°C) of Primary Cooling | Number of Times of Rolling in which Reduction Ratio per Pass at Time of Secondary Rolling is 20% or More | End Temperature (°C) of Secondary Rolling |
|---|---|---|---|---|---|---|---|---|---|
| Inventive Example 1 | Inventive Steel 1 | 61 | 1120 | 3 | 951 | 24 | 921 | 3 | 842 |
| Inventive Example 2 | Inventive Steel 2 | 60 | 1106 | 3 | 945 | 36 | 925 | 3 | 858 |
| Inventive Example 3 | Inventive Steel 3 | 60 | 1111 | 3 | 940 | 24 | 918 | 3 | 852 |
| Inventive Example 4 | Inventive Steel 4 | 62 | 1127 | 3 | 943 | 35 | 917 | 3 | 849 |
| Inventive Example 5 | Inventive Steel 5 | 84 | 1132 | 3 | 934 | 27 | 922 | 3 | 842 |
| Comparative Example 1 | Comparative Steel 1 | 58 | 1198 | 3 | 942 | 25 | 924 | 3 | 841 |
| Comparative Example 2 | Comparative Steel 2 | 66 | 1146 | 3 | 953 | 17 | 922 | 2 | 844 |
| Comparative Example 3 | Comparative Steel 3 | 65 | 1151 | 3 | 936 | 27 | 918 | 3 | 852 |

EP 3 889 304 B1

13

| Division | Steel Type No. | Heating Time (Minute) | Extraction Temperature (°C) | Number of Times of Rolling in which Reduction Ratio per Pass at Time of Primary Rolling is 12% or More | End Temperature (°C) of Primary Rolling | Cooling Rate (°C/s) of Primary Cooling | Stop Temperature (°C) of Primary Cooling | Number of Times of Rolling in which Reduction Ratio per Pass at Time of Secondary Rolling is 20% or More | End Temperature (°C) of Secondary Rolling |
|---|---|---|---|---|---|---|---|---|---|
| Comparative Example 4 | Comparative Steel 4 | 58 | 1153 | 3 | 941 | 18 | 924 | 3 | 851 |
| Comparative Example 5 | Comparative Steel 5 | 42 | 1201 | 3 | 934 | 25 | 911 | 2 | 857 |
| Comparative Example 6 | Inventive Steel 1 | 50 | 1210 | 2 | 928 | 22 | 898 | 2 | 884 |
| Comparative Example 7 | Inventive Steel 2 | 51 | 1206 | 2 | 972 | 17 | 945 | 2 | 876 |
| Comparative Example 8 | Inventive Steel 3 | 43 | 1232 | 2 | 965 | 18 | 934 | 1 | 899 |

EP 3 889 304 B1

14

[Table 4]

| Division | End Temperature (°C) of Tertiary Rolling | Cumulative Reduction Ratio (%) at Time of Secondary Rolling and Tertiary Rolling | Start Temperature (°C) of Secondary Cooling | Cooling Rate (°C/s) of Secondary Cooling | Coiling Temperature (°C) | Cooling Rate (°C/s) of Tertiary Cooling | Time (Second) of Tertiary Water-Cooling |
|---|---|---|---|---|---|---|---|
| Inventive Example 1 | 798 | 81 | 756 | 11 | 478 | 22 | 110 |
| Inventive Example 2 | 803 | 83 | 746 | 18 | 512 | 13 | 121 |
| Inventive Example 3 | 813 | 82 | 748 | 15 | 445 | 31 | 118 |
| Inventive Example 4 | 811 | 82 | 753 | 16 | 412 | 38 | 103 |
| Inventive Example 5 | 812 | 85 | 751 | 14 | 493 | 25 | 102 |
| Comparative Example 1 | 798 | 81 | 758 | 14 | 562 | 8 | 102 |
| Comparative Example 2 | 799 | 83 | 755 | 16 | 476 | 22 | 112 |
| Comparative Example 3 | 805 | 83 | 756 | 12 | 478 | 21 | 125 |
| Comparative Example 4 | 812 | 81 | 748 | 15 | 456 | 31 | 120 |
| Comparative Example 5 | 811 | 81 | 749 | 7 | 523 | 11 | 145 |
| Comparative Example 6 | 859 | 74 | 832 | 8 | 560 | 7 | 12 |
| Comparative Example 7 | 846 | 72 | 822 | 10 | 546 | 8 | 23 |
| Comparative Example 8 | 858 | 71 | 836 | 11 | 601 | 7 | 24 |

[Table 5]

| Division | Polygonal Ferrite | | Acicular Ferrite | | Bainitic Ferrite | | Martensite-austenite constituent | |
|---|---|---|---|---|---|---|---|---|
| | Fraction (Area%) | Average Effective Grain Size (μm) | Fraction (Area%) | Average Effective Grain Size (μm) | Fraction (Area%) | Average Effective Grain Size (μm) | Fraction (Area%) | Average Effective Grain Size (μm) |
| Inventive Example 1 | 2 | 12 | 75 | 8 | 22 | 13 | 1 | 0.5 |
| Inventive Example 2 | 3 | 11 | 74 | 9 | 22 | 14 | 1 | 0.7 |

(continued)

| Division | Polygonal Ferrite | | Acicular Ferrite | | Bainitic Ferrite | | Martensite-austenite constituent | |
|---|---|---|---|---|---|---|---|---|
| | Fraction (Area%) | Average Effective Grain Size (μm) | Fraction (Area%) | Average Effective Grain Size (μm) | Fraction (Area%) | Average Effective Grain Size (μm) | Fraction (Area%) | Average Effective Grain Size (μm) |
| Inventive Example 3 | 2 | 12 | 71 | 11 | 26 | 12 | 1 | 0.4 |
| Inventive Example 4 | 5 | 10 | 68 | 8 | 26 | 12 | 1 | 0.8 |
| Inventive Example 5 | 4 | 13 | 66 | 10 | 29 | 12 | 1 | 0.5 |
| Comparative Example 1 | 2 | 18 | 55 | 13 | 41 | 22 | 2 | 1 |
| Comparative Example 2 | 3 | 15 | 60 | 9 | 33 | 16 | 4 | 1.2 |
| Comparative Example 3 | 5 | 14 | 61 | 8 | 29 | 15 | 5 | 1. 4 |
| Comparative Example 4 | 2 | 12 | 66 | 7 | 26 | 15 | 6 | 1. 2 |
| Comparative Example 5 | 6 | 18 | 61 | 14 | 28 | 23 | 5 | 2. 2 |
| Comparative Example 6 | 12 | 22 | 53 | 16 | 27 | 26 | 8 | 3 |
| Comparative Example 7 | 15 | 23 | 35 | 17 | 43 | 28 | 7 | 3 |
| Comparative Example 8 | 14 | 28 | 36 | 19 | 45 | 35 | 5 | 2 |

[Table 6]

| Division | Yield Strength (MPa) | Tensile Strength (MPa) | Yield Ratio | Total Elongation (%) | Impact Energy (J, @-10°C) | Separation Length (mm, @-10°C) | Minimum Temperature (°C) at Which DWTT Percent Ductile Fracture of 85% or More is Satisfied |
|---|---|---|---|---|---|---|---|
| Inventive Example 1 | 573 | 735 | 0.78 | 44 | 366 | 0 | -30 |
| Inventive Example 2 | 560 | 693 | 0.81 | 42 | 360 | 0 | -30 |

(continued)

| Division | Yield Strength (MPa) | Tensile Strength (MPa) | Yield Ratio | Total Elongation (%) | Impact Energy (J, @-10°C) | Separation Length (mm, @-10°C) | Minimum Temperature (°C) at Which DWTT Percent Ductile Fracture of 85% or More is Satisfied |
|---|---|---|---|---|---|---|---|
| Inventive Example 3 | 575 | 722 | 0.80 | 42 | 336 | 2 | -30 |
| Inventive Example 4 | 590 | 715 | 0.83 | 44 | 356 | 0 | -30 |
| Inventive Example 5 | 576 | 723 | 0.80 | 45 | 363 | 1 | -30 |
| Comparative Example 1 | 532 | 648 | 0.82 | 36 | 145 | 9 | -5 |
| Comparative Example 2 | 543 | 655 | 0.83 | 38 | 189 | 8 | -7 |
| Comparative Example 3 | 542 | 651 | 0.83 | 39 | 184 | 5 | -10 |
| Comparative Example 4 | 551 | 648 | 0.85 | 37 | 187 | 7 | -9 |
| Comparative Example 5 | 547 | 648 | 0.84 | 38 | 165 | 5 | -3 |
| Comparative Example 6 | 513 | 657 | 0.78 | 44 | 185 | 8 | -11 |
| Comparative Example 7 | 509 | 665 | 0.77 | 44 | 183 | 9 | -12 |
| Comparative Example 8 | 598 | 632 | 0.95 | 45 | 176 | 15 | -5 |

It can be seen from Tables 1 to 6 that in a case of Inventive Examples 1 to 5 satisfying the alloy composition and the manufacturing conditions proposed by the present invention, polygonal ferrite, acicular ferrite, bainitic ferrite, and martensite-austenite constituent that have fine effective grain sizes are secured in appropriate fractions, such that a yield strength is 550 MPa or more, a tensile strength is 660 MPa or more, a yield ratio is 0.83 or less, a separation length at -10°C is less than 5 mm, an impact energy at -10°C is 320 J or more, a total elongation is 42% or more, and a minimum temperature at which a DWTT percent ductile fracture of 85% or more is satisfied is -30°C or lower, and strength, low-temperature toughness, and elongation are excellent and a yield ratio is low.

However, it can be seen that in a case of Comparative Examples 1 to 5, the alloy composition and the manufacturing conditions proposed by the present invention are not satisfied, such that types and fractions of microstructures of the present invention are not secured, and thus, mechanical properties are also not good.

It can be seen that in a case of Comparative Examples 6 to 8, the alloy composition proposed by the present invention is satisfied, but the manufacturing conditions proposed by the present invention are not satisfied, such that types and fractions of microstructures of the present invention are not secured, and thus, mechanical properties are also not good.

**Claims**

1.  A high-strength thick steel plate for a pipeline having excellent low-temperature toughness and elongation and a low yield ratio

    comprising, by wt%, 0.03 to 0.055% of C, 0.1 to 0.35% of Si, 1.7 to 2.2% of Mn, 0.01 to 0.04% of Al, 0.005 to 0.025% of Ti, 0.008% or less of N, 0.08 to 0.12% of Nb, 0.2 to 0.45% of Cr, 0.2 to 0.35% of Ni, 0.05 to 0.3% of Cu, 0.2 to 0.4% of Mo, 0.02% or less of P, 0.002% or less of S, 0.0005 to 0.004% of Ca, 0.01 to 0.04% of V, 0.0005% or less of B, a balance of Fe, and other inevitable impurities, and
    satisfying Relational expressions 1 to 4,
    wherein a microstructure of the steel plate comprises, by area%, 1 to 5% of polygonal ferrite, 60 to 75% of acicular ferrite, 20 to 30% of bainitic ferrite, and 5% or less of martensite-austenite constituent, and
    wherein the polygonal ferrite has an average effective grain size of 13 $\mu$m or less, and
    wherein the bainitic ferrite has an average effective grain size of 14 $\mu$m or less, and
    wherein the martensite-austenite constituent has an average effective grain size of 0.8 $\mu$m or less, wherein a yield strength in a direction of 30° with respect to a rolling direction is 550 MPa or more, a tensile strength is 660 MPa or more, a yield ratio is 0.83 or less, a separation length at - 10°C is less than 5 mm, an impact energy at -10°C is 320 J or more, a total elongation is 42% or more, and a minimum temperature at which a drop weight tearing test (DWTT) percent ductile fracture of 85% or more is satisfied is -30°C or lower, and

    $$[\text{Relational expression 1}] \ 19 \leq (\text{Mo}/96)/(\text{P}/31) \leq 30$$

    $$[\text{Relational expression 2}] \ 1.42 \leq \text{Cr} + 2\text{Mo} + \text{Cu} + \text{Ni} + 1000\text{B} \leq 1.75$$

    $$[\text{Relational expression 3}] \ 4 < \{3\text{C}/12 + \text{Mn}/55\} \times 100 \leq 4.9$$

    $$[\text{Relational expression 4}] \ 600 \leq 400\text{C} + 6800\text{Nb} + 600\text{V} + 800\text{Ti} + 300\text{Al} \leq 820$$

    where, contents of the alloying elements described in Relational expressions 1 to 4 are wt%.

2.  The high-strength thick steel plate for a pipeline of claim 1, wherein the acicular ferrite has an average effective grain size of 11 $\mu$m or less.

3.  A manufacturing method of a high-strength thick steel plate for a pipeline having excellent low-temperature toughness and elongation and a low yield ratio, comprising:

    heating a steel slab at 1160 to 1300°C, the steel slab comprising, by wt%, 0.03 to 0.055% of C, 0.1 to 0.35% of Si, 1.7 to 2.2% of Mn, 0.01 to 0.04% of Al, 0.005 to 0.025% of Ti, 0.008% or less of N, 0.08 to 0.12% of Nb, 0.2 to 0.45% of Cr, 0.2 to 0.35% of Ni, 0.05 to 0.3% of Cu, 0.2 to 0.4% of Mo, 0.02% or less of P, 0.002% or less of S, 0.0005 to 0.004% of Ca, 0.01 to 0.04% of V, 0.0005% or less of B, a balance of Fe, and other inevitable impurities, and satisfying conditions of Relational expressions 1 to 4;
    extracting the heated steel slab at 1070 to 1140°C;
    performing primary rolling for obtaining a steel plate by ending rolling of the extracted steel slab at 930 to 960°C;
    primarily water-cooling the steel plate to 890 to 925°C;
    performing secondary rolling for rolling the primarily water-cooled steel plate and ending the rolling at 840 to 860°C;
    performing tertiary rolling for rolling the secondarily rolled steel plate and ending the rolling at 770 to 820°C;
    starting to cool the tertiarily rolled steel plate at 740 to 760°C and secondarily water-cooling the tertiarily rolled steel plate at a cooling rate of 10 to 40°C/s;
    coiling the secondarily water-cooled steel plate at 400 to 520°C; and
    tertiarily water-cooling the wound steel plate for 100 seconds or more, and
    wherein a cumulative reduction ratio at the time of the secondary rolling and the tertiary rolling exceeds 80%,

[Relationship expression 1] $19 \leq (Mo/96)/(P/31) \leq 30$

[Relational expression 2] $1.42 \leq Cr + 2Mo + Cu + Ni + 1000B \leq 1.75$

[Relational expression 3] $4 < \{3C/12 + Mn/55\} \times 100 \leq 4.9$

[Relational expression 4] $600 \leq 400C + 6800Nb + 600V + 800Ti + 300Al \leq 820$

where, contents of the alloying elements described in Relational expressions 1 to 4 are wt%.

4. The manufacturing method of claim 3, wherein a heating time of the steel slab is 55 minutes or more.

5. The manufacturing method of claim 3, wherein at the time of the primary rolling, the steel slab is rolled three or more times at a reduction ratio of 12% or more per pass.

6. The manufacturing method of claim 3, wherein a cooling rate at the time of the primary water-cooling is 20 to 40°C/s.

7. The manufacturing method of claim 3, wherein at the time of the secondary rolling, the steel plate is rolled three or more times at a reduction ratio of 20% or more per pass.

8. The manufacturing method of claim 3, wherein a cooling rate at the time of the tertiary water-cooling is 10 to 40°C/s.

**Patentansprüche**

1. Hochfestes, dickes Stahlblech für eine Rohrleitung mit ausgezeichneter Tieftemperaturzähigkeit und Dehnung und einem geringen Streckverhältnis,

   das in Gew.-% 0,03 bis 0,055 % C, 0,1 bis 0,35 % Si, 1,7 bis 2,2 % Mn, 0,01 bis 0,04 % Al, 0,005 bis 0,025 % Ti, 0,008 % oder weniger N, 0,08 bis 0,12 % Nb, 0,2 bis 0,45 % Cr, 0,2 bis 0,35 % Ni, 0,05 bis 0,3 % Cu, 0,2 bis 0,4 % Mo, 0,02 % oder weniger P, 0,002 % oder weniger S, 0,0005 bis 0,004 % Ca, 0,01 bis 0,04 % V, 0,0005 % oder weniger B, einen Rest aus Fe und anderen unvermeidbaren Verunreinigungen umfasst und die Vergleichsausdrücke 1 bis 4 erfüllt,
   wobei eine Mikrostruktur des Stahlblechs in Flächenprozent 1 bis 5 % polygonalen Ferrit, 60 bis 75 % nadeligen Ferrit, 20 bis 30 % bainitischen Ferrit und 5 % oder weniger Martensit-Austenit-Bestandteil umfasst und
   wobei der polygonale Ferrit eine durchschnittliche effektive Korngröße von 13 $\mu$m oder weniger aufweist und wobei der bainitische Ferrit eine durchschnittliche effektive Korngröße von 14 $\mu$m oder weniger aufweist und wobei der Martensit-Austenit-Bestandteil eine durchschnittliche effektive Korngröße von 0,8 $\mu$m oder weniger aufweist,
   wobei eine Streckgrenze in einer Richtung von 30° in Bezug auf eine Walzrichtung 550 MPa oder mehr beträgt, eine Zugfestigkeit 660 MPa oder mehr beträgt, ein Streckverhältnis 0,83 oder weniger beträgt, eine Trennlänge bei -10°C weniger als 5 mm beträgt, eine Kerbschlagarbeit bei -10°C 320 J oder mehr beträgt, eine Gesamtdehnung 42% oder mehr beträgt und eine Mindesttemperatur, bei der ein Verformungsbruchanteil von 85 % oder mehr bei der Fallgewichtsreißprüfung (DWTT) erreicht wird, -30°C oder weniger beträgt, und

[Vergleichsausdruck 1] $19 \leq (Mo/96)/(P/31) \leq 30$

[Vergleichsausdruck 2] $1,42 \leq Cr + 2Mo + Cu + Ni + 1000B \leq 1,75$

[Vergleichsausdruck 3] $4 < \{3C/12 + Mn/55\} \times 100 \leq 4,9$

$$[\text{Vergleichsausdruck 4}]\ 600 \leq 400C + 6800Nb + 600V + 800Ti + 300Al \leq 820$$

wobei die Gehalte der in den Vergleichsausdrücken 1 bis 4 beschriebenen Legierungselemente Gew.-% sind.

2. Hochfestes, dickes Stahlblech für eine Rohrleitung nach Anspruch 1, wobei der nadelige Ferrit eine durchschnittliche effektive Korngröße von 11 $\mu$m oder weniger aufweist.

3. Verfahren zur Herstellung eines hochfesten, dicken Stahlblechs für eine Rohrleitung mit ausgezeichneter Tieftemperaturzähigkeit und Dehnung und einem geringen Streckverhältnis, umfassend:

Erwärmen einer Stahlbramme auf 1160 bis 1300 °C, wobei die Stahlbramme in Gew.-% 0,03 bis 0,055 % C, 0,1 bis 0,35 % Si, 1,7 bis 2,2 % Mn, 0,01 bis 0,04 % Al, 0,005 bis 0,025 % Ti, 0,008 % oder weniger N, 0,08 bis 0,12 % Nb, 0,2 bis 0,45 % Cr, 0,2 bis 0,35 % Ni, 0,05 bis 0,3 % Cu, 0,2 bis 0,4 % Mo, 0,02 % oder weniger P, 0,002 % oder weniger S, 0,0005 bis 0,004 % Ca, 0,01 bis 0,04 % V, 0,0005 % oder weniger B, einen Rest aus Fe und anderen unvermeidbaren Verunreinigungen umfasst und die Bedingungen der Vergleichsausdrücke 1 bis 4 erfüllt;
Abziehen der erwärmten Stahlbramme bei 1070 bis 1140 °C;
Durchführen eines Primärwalzens zum Erhalt eines Stahlblechs mit Beendigung des Walzens der abgezogenen Stahlbramme bei 930 bis 960 °C;
primäre Wasserkühlung des Stahlblechs auf 890 bis 925 °C;
Durchführen eines Sekundärwalzens zum Walzen des primär wassergekühlten Stahlblechs und Beendigung des Walzens bei 840 bis 860 °C;
Durchführen eines Tertiärwalzens zum Walzen des sekundär gewalzten Stahlblechs und Beendigung des Walzens bei 770 bis 820 °C;
Beginn der Abkühlung des tertiär gewalzten Stahlblechs bei 740 bis 760°C und sekundäre Wasserkühlung des tertiär gewalzten Stahlblechs mit einer Abkühlgeschwindigkeit von 10 bis 40 °C/s;
Aufwickeln des sekundär wassergekühlten Stahlblechs bei 400 bis 520 °C; und
tertiäre Wasserkühlung des aufgewickelten Stahlblechs für 100 Sekunden oder mehr, und
wobei ein kumulatives Reduktionsverhältnis zum Zeitpunkt des Sekundärwalzens und des Tertiärwalzens 80% übersteigt,

$$[\text{Vergleichsausdruck 1}]\ 19 \leq (Mo/96)/(P/31) \leq 30$$

$$[\text{Vergleichsausdruck 2}]\ 1{,}42 \leq Cr + 2Mo + Cu + Ni + 1000B \leq 1{,}75$$

$$[\text{Vergleichsausdruck 3}]\ 4 < \{3C/12 + Mn/55\} \times 100 \leq 4{,}9$$

$$[\text{Vergleichsausdruck 4}]\ 600 \leq 400C + 6800Nb + 600V + 800Ti + 300Al \leq 820$$

wobei die Gehalte der in den Vergleichsausdrücken 1 bis 4 beschriebenen Legierungselemente Gew.-% sind.

4. Herstellungsverfahren nach Anspruch 3, wobei eine Erwärmungszeit der Stahlbramme 55 Minuten oder mehr beträgt.

5. Herstellungsverfahren nach Anspruch 3, wobei die Stahlbramme zum Zeitpunkt des Primärwalzens drei oder mehr Mal mit einem Reduktionsverhältnis von 12 % oder mehr pro Durchgang gewalzt wird.

6. Herstellungsverfahren nach Anspruch 3, wobei eine Abkühlgeschwindigkeit zum Zeitpunkt der primären Wasserkühlung 20 bis 40 °C/s beträgt.

7. Herstellungsverfahren nach Anspruch 3, wobei das Stahlblech zum Zeitpunkt des Sekundärwalzens drei oder mehr Mal mit einem Reduktionsverhältnis von 20 % oder mehr pro Durchgang gewalzt wird.

8.  Herstellungsverfahren nach Anspruch 3, wobei eine Abkühlgeschwindigkeit zum Zeitpunkt der tertiären Wasserkühlung 10 bis 40 °C/s beträgt.

**Revendications**

1.  Plaque d'acier épaisse à haute résistance pour un pipeline, présentant une excellente ténacité à basse température et un excellent allongement, et un faible rapport d'élasticité

    comprenant, en % en poids, 0,03 à 0,055 % de C, 0,1 à 0,35 % de Si, 1,7 à 2,2 % de Mn, 0,01 à 0,04 % d'Al, 0,005 à 0,025 % de Ti, 0,008 % ou moins de N, 0,08 à 0,12 % de Nb, 0,2 à 0,45 % de Cr, 0,2 à 0,35 % de Ni, 0,05 à 0,3 % de Cu, 0,2 à 0,4 % de Mo, 0,02 % ou moins de P, 0,002 % ou moins de S, 0,0005 à 0,004 % de Ca, 0,01 à 0,04 % de V, 0,0005 % ou moins de B, un reste de Fe, et d'autres impuretés inévitables, et satisfaisant aux expressions relationnelles 1 à 4,
    dans laquelle une microstructure de la plaque d'acier comprend, en % en aire, 1 à 5 % de ferrite polygonale, 60 à 75 % de ferrite aciculaire, 20 à 30 % de ferrite bainitique, et 5 % ou moins de constituant martensite-austénite, et
    dans laquelle la ferrite polygonale a une taille moyenne de grain effective de 13 $\mu$m ou moins, et
    dans laquelle la ferrite bainitique a une taille moyenne de grain effective de 14 $\mu$m ou moins, et
    dans laquelle le constituant martensite-austénite a une taille moyenne de grain effective de 0,8 $\mu$m ou moins, dans laquelle une limite d'élasticité dans une direction de 30° par rapport à une direction de laminage est de 550 MPa ou plus, une résistance à la traction est de 660 MPa ou plus, un rapport d'élasticité est de 0,83 ou moins, une longueur de séparation à -10 °C est inférieure à 5 mm, une énergie d'impact à -10 °C est de 320 J ou plus, un allongement total est de 42 % ou plus, et une température minimale à laquelle un pour cent de rupture ductile de 85 % ou plus de l'essai de rupture par chute de poids (DWTT) est satisfait est de -30 °C ou moins, et

    $$[\text{Expression relationnelle 1}] \quad 19 \leq (Mo/96)/(P/31) \leq 30$$

    $$[\text{Expression relationnelle 2}] \quad 1,42 \leq Cr + 2Mo + Cu + Ni + 1000B \leq 1,75$$

    $$[\text{Expression relationnelle 3}] \quad 4 < \{3C/12 + Mn/55\} \times 100 \leq 4,9$$

    $$[\text{Expression relationnelle 4}] \quad 600 \leq 400C + 6800Nb + 600V + 800Ti + 300Al \leq 820$$

    où les teneurs en éléments d'alliage décrites dans les expressions relationnelles 1 à 4 sont en % en poids.

2.  Plaque d'acier épaisse à haute résistance pour un pipeline selon la revendication 1, dans laquelle la ferrite aciculaire a une taille moyenne de grain effective de 11 $\mu$m ou moins.

3.  Procédé de fabrication d'une plaque d'acier épaisse à haute résistance pour un pipeline présentant une excellente ténacité à basse température et un excellent allongement et un faible rapport d'élasticité, comprenant :

    le chauffage d'une brame d'acier à 1160 à 1300 °C, la brame d'acier comprenant, en % en poids, 0,03 à 0,055 % de C, 0,1 à 0,35 % de Si, 1,7 à 2,2 % de Mn, 0,01 à 0,04 % d'Al, 0,005 à 0,025 % de Ti, 0,008 % ou moins de N, 0,08 à 0,12 % de Nb, 0,2 à 0,45 % de Cr, 0,2 à 0,35 % de Ni, 0,05 à 0,3 % de Cu, 0,2 à 0,4 % de Mo, 0,02 % ou moins de P, 0,002 % ou moins de S, 0,0005 à 0,004 % de Ca, 0,01 à 0,04 % de V, 0,0005 % ou moins de B, un reste de Fe, et d'autres impuretés inévitables, et satisfaisant aux conditions des expressions relationnelles 1 à 4 ;

l'extraction de la brame d'acier chauffée à 1070 à 1140 °C ; la réalisation d'un laminage primaire pour obtenir une plaque d'acier en terminant le laminage de la brame d'acier extraite à 930 à 960 °C ;

le refroidissement primaire à l'eau de la plaque d'acier à 890 à 925 °C ;

la réalisation d'un laminage secondaire pour laminer la plaque d'acier ayant subi un refroidissement primaire à l'eau et la terminaison du laminage à 840 à 860 °C ;

la réalisation d'un laminage tertiaire pour laminer la plaque d'acier ayant subi un laminage secondaire et la terminaison du laminage à 770 à 820 °C ;

le démarrage du refroidissement de la plaque d'acier ayant subi un laminage tertiaire à 740 à 760 °C et le refroidissement secondaire à l'eau de la plaque d'acier ayant subi un laminage tertiaire à une vitesse de refroidissement de 10 à 40 °C/s ;

le bobinage de la plaque d'acier ayant subi un refroidissement secondaire à l'eau à 400 à 520 °C ; et

le refroidissement tertiaire à l'eau de la plaque d'acier bobinée pendant 100 secondes ou plus, et

dans lequel un rapport de réduction cumulé au moment du laminage secondaire et du laminage tertiaire dépasse 80 %,

[Expression relationnelle 1] $19 \leq (Mo/96)/(P/31) \leq 30$

[Expression relationnelle 2] $1,42 \leq Cr + 2Mo + Cu + Ni + 1000B \leq 1,75$

[Expression relationnelle 3] $4 < \{3C/12 + Mn/55\} \times 100 \leq 4,9$

[Expression relationnelle 4] $600 \leq 400C + 6800Nb + 600V + 800Ti + 300Al \leq 820$

où les teneurs en éléments d'alliage décrites dans les expressions relationnelles 1 à 4 sont en % en poids.

4. Procédé de fabrication selon la revendication 3, dans lequel une durée de chauffage de la brame d'acier est de 55 minutes ou plus.

5. Procédé de fabrication selon la revendication 3, dans lequel au moment du laminage primaire, la brame d'acier est laminée trois fois ou plus à un rapport de réduction de 12 % ou plus par passe.

6. Procédé de fabrication selon la revendication 3, dans lequel une vitesse de refroidissement au moment du refroidissement primaire à l'eau est de 20 à 40 °C/s.

7. Procédé de fabrication selon la revendication 3, dans lequel au moment du laminage secondaire, la plaque d'acier est laminée trois fois ou plus à un rapport de réduction de 20 % ou plus par passe.

8. Procédé de fabrication selon la revendication 3, dans lequel une vitesse de refroidissement au moment du refroidissement tertiaire à l'eau est de 10 à 40 °C/s.

**EP 3 889 304 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010077492 A
- JP H10306316 A
- JP 2001207220 A

**Non-patent literature cited in the description**

- **SERAJZADEH S.** *Modelling and Simulation in Materials Science and Engineering,* 01 October 2002